(19) Europäisches Patentamt
European Patent Office
Office européen des brevets

(11) **EP 4 241 570 A1**

(12) **EUROPEAN PATENT APPLICATION**
published in accordance with Art. 153(4) EPC

(43) Date of publication:
**13.09.2023 Bulletin 2023/37**

(21) Application number: **21889296.6**

(22) Date of filing: **08.11.2021**

(51) International Patent Classification (IPC):
*A23J 3/00* (2006.01)       *A23J 3/14* (2006.01)
*A23J 3/16* (2006.01)       *A23L 13/00* (2016.01)
*A23L 35/00* (2016.01)       *A23L 11/00* (2021.01)

(52) Cooperative Patent Classification (CPC):
**A23J 3/00; A23J 3/14; A23J 3/16; A23L 11/00;
A23L 13/00; A23L 35/00**

(86) International application number:
**PCT/JP2021/040966**

(87) International publication number:
**WO 2022/097745 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2020  JP 2020186452
10.02.2021  JP 2021020243**

(71) Applicant: **Amano Enzyme Inc.
Nagoya-shi
Aichi 460-8630 (JP)**

(72) Inventors:
• **OBARA, Takakiyo
Kakamigahara-shi, Gifu 509-0109 (JP)**
• **TAKAHASHI, Akiko
Kakamigahara-shi, Gifu 509-0109 (JP)**

(74) Representative: **Müller-Boré & Partner
Patentanwälte PartG mbB
Friedenheimer Brücke 21
80639 München (DE)**

(54) **PRODUCTION METHOD FOR MEAT-LIKE PROCESSED FOOD PRODUCT**

(57)    The purpose of the present invention is to provide a processing technique for increasing the binding property of a texturized plant protein ingredient in the production of a meat-like processed food product. The binding property of a texturized plant protein ingredient is increased in a meat-like processed food product obtained through a production method for a meat-like processed food product, the method including a step A for causing a protease to act on a texturized plant protein ingredient.

**EP 4 241 570 A1**

**Description**

TECHNICAL FIELD

The present invention relates to a method for producing a meat-like processed food product. More specifically, the present invention relates to a processing technique of enhancing the binding property of a texturized plant protein ingredient in production of a meat-like processed food product.

BACKGROUND ART

In the food market, the share of plant meat-like food ingredients called meat substitutes has grown recently. Such meat-like food ingredients used to target some consumers including vegetarians and vegans, but the demand trend has changed in recent years. In addition, awareness has increased about health consciousness, diet, environmental problems, animal welfare, and the like, and as a result, the meat-like food ingredients are attracting attention again.

Therefore, various techniques of binding a meat-like food ingredient have been studied in order to produce a food imitating a processed food product of minced meat, such as a hamburg steak, using a meat-like food ingredient. For example, Patent Document 1 discloses a method for producing meat-like foods, which is intended to enable production of a meat-like protein-containing food that does not lose its shape even after cooking and has elastic feeling, characterized by mixing, under humidity control, and forming a granular soybean protein, an isolated soybean protein, and a cation that contains a predetermined cation, has a weight ratio to the isolated soybean protein of 0.005 to 0.1, and contains a divalent cation at a weight ratio to the isolated soybean protein of 0.01 or less, and heating and binding the mixture by microwave irradiation so that the moisture content is 40 to 70%. Patent Document 2 discloses a method for producing a meat-like protein-containing food, which is intended to produce a meat-like protein-containing food that does not lose its shape even after cooking and has a juicy and elastic feeling, characterized by mixing a granular defatted soybean protein obtained by reconstituting a dry granular defatted soybean protein with water or hot water using a weak alkaline solution, and egg white or egg white powder.

Meanwhile, various techniques of modifying non-texturized plant protein ingredients, such as powder-like, paste-like, and milk-like ingredients, have been studied. For example, Patent Document 3 discloses a method of decomposing β-conglycinin, which is a main allergen, by allowing a protease to act on a soybean protein. Patent Document 4 discloses that in a method for producing a soybean protein using a transglutaminase and a protease, the protease is used for the purpose of decreasing the viscosity increased by the transglutaminase.

PRIOR ART DOCUMENTS

PATENT DOCUMENTS

Patent Document 1: WO 2010/119985 A
Patent Document 2: Japanese Patent Laid-open Publication No. 2013-009617
Patent Document 3: Japanese Patent Laid-open Publication No. 11-178512
Patent Document 4: Japanese Patent Laid-open Publication No. 2006-141231

SUMMARY OF THE INVENTION

PROBLEMS TO BE SOLVED BY THE INVENTION

The technique of binding a meat-like food ingredient is still developing, and has many restrictions on the method of producing a meat-like food ingredient, or the obtained binding property is insufficient. Thus, the technique still has room for improvement.

Therefore, an object of the present invention is to provide a processing technique of enhancing the binding property of a texturized plant protein ingredient in production of a meat-like processed food product.

MEANS FOR SOLVING THE PROBLEM

The present inventors have unexpectedly found that when a protease, which has been used only for degradation of an allergen protein or reduction in viscosity in modification of a non-texturized plant protein ingredient, is applied to production of a meat-like processed food product, the texturized plant protein ingredient has an enhanced binding property, which is a property that is essentially not required for a non-texturized plant protein ingredient. The present invention has been completed by further studies based on the above-described finding. That is, the present invention provides the invention of the aspects described below.

That is, the present invention provides the invention of the aspects described below.

Item 1. A method for producing a meat-like processed food product, the method including a step A of allowing a protease to act on a texturized plant protein ingredient.

Item 2. The method according to the item 1, wherein the protease is a protease derived from an Aspergillus microorganism, a protease derived from a Geobacillus microorganism, a protease derived from a Bacillus microorganism, and/or a protease derived from a plant.

Item 3. The method according to the item 1 or 2, wherein the protease is a protease derived from Aspergillus oryzae, a protease derived from Aspergillus melleus, a protease derived from Geobacillus stearothermophilus, a protease derived from Bacillus stearothermophilus, a protease derived from Bacillus amyloliquefaciens, a protease derived from Bacillus licheniformis, papain, and/or bromelain.

Item 4. The method according to any one of the items 1 to 3, further including a step B of allowing a transglutaminase, a glucose oxidase, a maltotriosyl transferase, a polyphenol oxidase, an α-amylase, a β-amylase, a β-glucosidase, a glucoamylase, a cellulase, a pectinase, a lipase, a nuclease, and/or a deaminase to act.

Item 5. The method according to any one of the items 1 to 4, wherein the step B is performed after the step A.

Item 6. The method according to any one of the items 1 to 5, wherein the texturized plant protein ingredient contains a plant protein that is a soybean protein and/or a pea protein.

Item 7. The method according to any one of the items 1 to 6, wherein the protease is used in an amount of 100 U or more with respect to 1 g of the plant protein contained in the texturized plant protein ingredient.

Item 8. A binding property improver for a texturized plant protein ingredient, the binding property improver including a protease.

ADVANTAGES OF THE INVENTION

According to the present invention, a processing technique is provided that enhances the binding property of a texturized plant protein ingredient in production of a meat-like processed food product.

BRIEF DESCRIPTION OF THE DRAWINGS

Fig. 1 shows appearances of hamburg steaks (before grilling) formed using a soybean meat (block-like) and a protease.

Fig. 2 shows appearances of hamburg steaks (after grilling) cooked using a soybean meat (block-like), a protease, and bread crumbs.

Fig. 3 shows appearances of hamburg steaks (before grilling) formed using a soybean meat (block-like), a protease, bread crumbs, and an egg and appearances and cross-sections of the hamburg steaks after grilling.

Fig. 4 shows appearances of hamburg steaks (before grilling) formed using a soybean meat (block-like), a protease, and a predetermined enzyme and cross-sections of the hamburg steaks after grilling.

Fig. 5 shows appearances of hamburg steaks (before grilling) formed using a soybean meat (block-like), a protease, a predetermined enzyme, and starch and appearances and cross-sections of the hamburg steaks after grilling.

Fig. 6 shows appearances of hamburg steaks (before grilling) formed using a soybean meat (block-like) and a protease and appearances of the hamburg steaks after grilling.

Fig. 7 shows appearances of hamburg steaks (before grilling) formed using a soybean meat (block-like) and one or two types of proteases and appearances of the hamburg steaks after grilling.

Fig. 8 shows appearances of hamburg steaks (before grilling) formed using a soybean meat (block-like) and a single protease or a combination of a protease and a combined enzyme and appearances of the hamburg steaks after grilling.

Fig. 9 shows appearances of fried hamburg steaks formed using a soybean meat (block-like or flake-like) or pea meat (block-like) and a protease.

EMBODIMENTS OF THE INVENTION

1. Method for Producing Meat-Like Processed Food Product

The method for producing a meat-like processed food product of the present invention includes a step A of allowing a protease to act on a texturized plant protein ingredient. Thus, the binding property of the texturized plant protein ingredient can be enhanced. Hereinafter, the method for producing a meat-like processed food product will be described in detail.

The texturized plant protein ingredient used in the present invention is known as a meat substitute (pseudo meat), and typical examples of the ingredient include meat-like texturized ingredients obtained by extruding a raw ingredient mixture containing a plant protein and water with an extruder or the like and drying or refrigerating the extruded mixture.

Examples of the form of the texturized plant protein ingredient include granular form and fibrous form. Among the forms of the texturized plant protein ingredient, granular form is preferable from the viewpoint of further enhancing the effect of improving the binding property. The more specific form of the granular texturized plant protein ingredient may be a mince-like, flake-like, or block-like form. The method for producing of the present invention can impart an excellent binding property to a texturized plant protein ingredient, and therefore even in a case where a block-like ingredient, which has a small surface area per unit volume, is used among granular texturized plant protein ingredients, grains of the texturized plant protein ingredient can be gathered and formed into a lump shape.

More specific examples of the texturized plant protein ingredient include granular plant proteins and fibrous plant proteins. The granular plant proteins and the fibrous plant proteins refer to those defined in "Japan Agricultural Standards for plant proteins". However, the texturized plant protein ingredient used in the present invention is not limited to these proteins as long as it is a meat-like texturized ingredient as described above.

The type of the plant protein contained in the texturized plant protein ingredient is not particularly limited, and examples of the plant protein include bean proteins such as a soybean protein, a favabean protein, a pea protein, a chickpea protein, and a mung bean protein, and grain proteins such as a wheat protein, a rye protein, an oat protein, and a corn protein.

The plant protein contained in the texturized plant protein ingredient may include one of the above-described plant proteins singly or may include two or more thereof. Among these plant proteins, bean proteins are preferable, and a soybean protein and a pea protein are more preferable from the viewpoint of further enhancing the effect of improving the binding property.

In the present invention, one texturized plant protein ingredient may be used singly, or two or more different texturized plant protein ingredients may be used in combination. From the viewpoint of further enhancing the effect of improving the binding property, texturized bean protein ingredients are preferable, and texturized soybean protein ingredients and texturized pea protein ingredients are more preferable as the texturized plant protein ingredient.

The content of the plant protein contained in the texturized plant protein ingredient (in a normal condition in which the texturized plant protein ingredient is dry, the same applies hereinafter) is not particularly limited, and is, for example, 30 wt% or more, or 40 wt% or more. The content is preferably 43 wt% or more, more preferably 45 wt% or more, and still more preferably 50 wt% or more or 52 wt% or more from the viewpoint of further enhancing the effect of improving the binding property. The upper limit of the content range is not particularly limited, and is, for example, 90 wt% or less, and is preferably 80 wt% or less.

The texturized plant protein ingredient can contain another raw ingredient and/or food additive as necessary in addition to the plant protein. Examples of another raw ingredient include edible plant fats and oils, salt, starches, sugars, spices, concentrated extracts of animals and plants, and protein hydrolysates. Examples of the food additive include tissue improvers such as calcium sulfate, seasonings such as monosodium L-glutamate, disodium 5'-ribonucleotide, disodium 5'-inosinate, and disodium 5'-guanylate, antioxidants such as L-ascorbic acid, and flavors.

Other than the type of the plant protein and the content ratio of the plant protein, the characteristics (for example, the property, the moisture content, the particle size, the product temperature, the raw ingredient other than the food additive, the food additive, the chewy texture, the water holding property, the foreign matters, and the net content) of the texturized plant protein ingredient usable in the present invention and their measurement methods can conform to the characteristics and the measurement methods defined in "Japan Agricultural Standards for plant proteins".

The protease used in the step A of the method for producing of the present invention is an enzyme having a protease activity (Group EC 3. 4). The protease is to have at least an endopeptidase activity, and may be a protease having an endopeptidase activity singly or a protease having both an endopeptidase activity and an exopeptidase activity.

The type of the protease is not particularly limited, and the protease may be an acidic protease, a neutral protease, or an alkaline protease.

Specific examples of the protease include proteases derived from microorganisms, mammals, plants, and the like, and more specifically, proteases derived from microorganisms belonging to the genera Aspergillus, Geobacillus, Bacillus, Streptomyces, Rhizopus, and the like, mammals such as a pig (pancreas), and plants such as a papaya and a pineapple. Specific examples of the proteases derived from microorganisms belonging to the genus Aspergillus include proteases derived from Aspergillus oryzae, Aspergillus niger, Aspergillus melleus, and Aspergillus sojae. Specific examples of the proteases derived from microorganisms belonging to the genus Geobacillus include proteases derived from Geobacillus stearothermophilus and Geobacillus caldoproteolyticus. Specific examples of the proteases derived from microorganisms belonging to the genus Bacillus include proteases derived from Bacillus stearothermophilus, Bacillus amyloliquefaciens, Bacillus subtilis, Bacillus licheniformis, and Bacillus polymyxa. Examples of the proteases derived from plants such as a papaya and a pineapple include papain and bromelain. These proteases may be used singly or in combination of two or more thereof.

Among the above proteases, proteases derived from microorganisms belonging to the genera Aspergillus, Geobacillus, and Bacillus, and/or proteases derived from plants such as a papaya and a pineapple (more preferably, proteases derived from microorganisms belonging to the genus Geobacillus) are preferred, and proteases derived from Aspergillus oryzae, Aspergillus melleus, Geobacillus stearothermophilus, Bacillus stearothermophilus, Bacillus amyloliquefaciens, and Bacillus licheniformis, papain, and bromelain (more preferably, a protease derived from Geobacillus stearothermophilus) are more preferred, from the viewpoint of, for example, further enhancing the effect of improving the binding property.

The amount of the protease used is not particularly limited, and is, for example, 100 U or more, and preferably 300 U or more with respect to 1 g of the plant protein contained in the texturized plant protein ingredient. The amount of the protease used with respect to 1 g of the plant protein is preferably 500 U or more, more preferably 650 U or more, still more preferably 800 U or more, even more preferably 950 U or more, and still even more preferably 1500 U or more, 2000 U or more, 5000 U or more, or 7000 U or more from the viewpoint of further enhancing the effect of improving the binding property. The upper limit of the range of the amount of the protease used with respect to 1 g of the plant protein is not particularly limited, and is, for example, 20000 U or less or 10000 U or less, more preferably 9000 U or less, and still more preferably 8000 U or less, 6000 U or less, 3000 U or less, or 2000 U or less. The proteases derived from microorganisms belonging to the genus Geobacillus (preferably, the protease derived from Geobacillus stearothermophilus) have a particularly excellent effect of improving the binding property, so that even if they are used in a relatively small amount, an effect of improving the binding property can be effectively obtained. Therefore, the upper limit of the range of the amount of the protease derived from microorganisms belonging to the genus Geobacillus used is suitably, for example, 1500 U or less, preferably 1000 U or less, and more preferably 800 U or less with respect to 1 g of the plant protein.

The amount of the protease used with respect to 1 g of the texturized plant protein ingredient (in a dry condition, the same applies hereinafter) is, for example, 50 U or more, or 140 U or more. The amount of the protease used with respect to 1 g of the texturized plant protein ingredient is preferably 230 U or more, more preferably 300 U or more, still more preferably 360 U or more, even more preferably 430 U or more, and still even more preferably 670 U or more, 900 U or more, 2300 U or more, or 3200 U or more from the viewpoint of further enhancing the effect of improving the binding property. The upper limit of the range of the amount of the protease used with respect to 1 g of the texturized plant protein ingredient is not particularly limited, and is, for example, 10000 U or less or 4500 U or less, more preferably 4000 U or less, and still more preferably 3600 U or less, 2700 U or less, 1300 U or less, or 900 U or less. The proteases derived from microorganisms belonging to the genus Geobacillus (preferably, the protease derived from Geobacillus stearothermophilus) have a particularly excellent effect of improving the binding property, so that even if they are used in a relatively small amount, an effect of improving the binding property can be effectively obtained. Therefore, the upper limit of the range of the amount of the protease derived from microorganisms belonging to the genus Geobacillus used is suitably, for example, 680 U or less, preferably 450 U or less, and more preferably 350 U or less with respect to 1 g of the texturized plant protein ingredient.

Note that the protease activity is determined so that when protease is reacted with casein as a substrate (under a pH condition of pH 3.0 in the case of measuring an acidic protease activity, pH 6.0 in the case of measuring a neutral protease activity, or pH 8.0 in the case of measuring an alkaline protease) at 37°C, the amount of the enzyme that generates a product in an amount equivalent to 1 $\mu$g of tyrosine per minute is 1 unit (1U).

In the step A, a texturized plant protein ingredient obtained by reconstitution with water or thawing is to be appropriately mixed with a protease. In addition to the protease, a binder and/or another food ingredient can be mixed as necessary. As the binder, one or more can be selected from bread crumbs, starch, an egg, and the like and used. Another food ingredient can be appropriately determined by those skilled in the art according to the kind of the meat-like processed food product, and examples of the food ingredient include vegetables.

The processing conditions in the step A are not particularly limited, and can be set in consideration of the optimum conditions for the protease to be used. The processing temperature is, for example, 40 to 75°C, and preferably 50 to 70°C, 55 to 69°C, 60 to 68°C, or 63 to 67°C.

The processing time in the step A is not particularly limited, and depends on, for example, the scale of the texturized plant protein ingredient. The processing time is, for example, 20 minutes or more, preferably 40 minutes or more, and more preferably 50 minutes or more. The upper limit of the processing time range is not particularly limited, and is, for example, 24 hours or less, 12 hours or less, 6 hours or less, or 2 hours or less.

The method for producing of the present invention can further include a step B of allowing an enzyme other than a protease (hereinafter, also described as "combined enzyme") to act, from the viewpoint of further enhancing the binding property. The combined enzyme is not particularly limited, and is preferably a transglutaminase, a glucose oxidase, a maltotriosyl transferase, a polyphenol oxidase, α-amylase, β-amylase, β-glucosidase, glucoamylase, a cellulase, a pectinase, a lipase, a nuclease, and/or a deaminase, from the viewpoint of not impairing expression of an effect of improving the binding property by the protease.

The transglutaminase used in the present invention is an enzyme having a transglutaminase activity (EC 2. 3. 2. 13). Examples of the transglutaminase include both calcium-dependent transglutaminases, which require calcium for activity expression, and calcium-independent transglutaminases, which require no calcium for activity expression. Specific examples of the transglutaminase include transglutaminases derived from microorganisms, mammals, fishes, and the like, and more specifically, transglutaminases derived from microorganisms belonging to the genera Streptomyces, Bacillus, Geobacillus, and the like, mammals such as a guinea pig (liver), a cow (blood), and a pig (blood), and fishes such as a salmon, a red sea bream, and a cod.

These transglutaminases may be used singly or in combination of two or more thereof. Among calcium-dependent and calcium-independent transglutaminases, calcium-independent transglutaminases are preferable from the viewpoint of further enhancing the effect of improving the binding property. Among the above-described transglutaminases, transglutaminases derived from microorganisms are preferable, transglutaminases derived from microorganisms belonging to the genus Streptomyces are more preferable, and a transglutaminase derived from Streptomyces mobaraensis is particularly preferable, from the viewpoint of further enhancing the effect of improving the binding property.

The amount of the transglutaminase used is not particularly limited, and is, for example, 1 U or more, and preferably 5 U or more with respect to 1 g of the plant protein contained in the texturized plant protein ingredient. The amount of the transglutaminase used with respect to 1 g of the plant protein contained in the texturized plant protein ingredient is preferably 10 U or more, more preferably 15 U or more, and still more preferably 20 U or more from the viewpoint of further enhancing the effect of improving the binding property. The upper limit of the range of the amount of the transglutaminase used with respect to 1 g of the plant protein is not particularly limited, and is, for example, 100 U or less or 50 U or less, preferably 40 U or less, and more preferably 30 U or less.

The amount of the transglutaminase used with respect to 1 g of the texturized plant protein ingredient is, for example, 2.3 U or more. The amount of the transglutaminase used with respect to 1 g of the texturized plant protein ingredient is preferably 1 U or more, more preferably 4.5 U or more, still more preferably 6.8 U or more, and still even more preferably 9 U or more from the viewpoint of further enhancing the effect of improving the binding property. The upper limit of the range of the amount of the transglutaminase used with respect to 1 g of the texturized plant protein ingredient is not particularly limited, and is, for example, 50 U or less, preferably 22 U or less, more preferably 18 U or less, and still more preferably 13 U or less.

The ratio between the amounts of the protease and the transglutaminase used is determined by the above-described amounts of the protease and the transglutaminase used, and from the viewpoint of further enhancing the effect of improving the binding property, the amount of the transglutaminase used with respect to 1 U of the protease is, for example, 0.001 U or more, preferably 0.01 U or more, preferably 0.02 U or more, more preferably 0.025 U or more, and still more preferably 0.03 U or more. The upper limit of the range of the amount of the transglutaminase used with respect to 1 U of the protease is not particularly limited, and is, for example, 1 U or less, preferably 0.1 U or less, more preferably 0.06 U or less, and still more preferably 0.04 U or less.

Note that the activity of a transglutaminase is determined so that when the transglutaminase is reacted with benzyloxycarbonyl-L-glutaminylglycine and hydroxylamine as substrates at 37°C, the amount of the enzyme that generates 1 μmol of hydroxamic acid per minute is 1 unit (1 U).

The glucose oxidase used in the present invention is an enzyme having a glucose oxidase activity (EC 1. 1. 3. 4). Specific examples of the glucose oxidase include glucose oxidases derived from microorganisms and the like, and more specifically, glucose oxidases derived from microorganisms belonging to the genus Aspergillus and the like. Examples of the glucose oxidases derived from microorganisms belonging to the genus Aspergillus include a glucose oxidase derived from Aspergillus niger.

These glucose oxidases may be used singly or in combination of two or more thereof. Among the above-described glucose oxidases, a glucose oxidase derived from Aspergillus niger is preferable from the viewpoint of further enhancing the effect of improving the binding property.

The amount of the glucose oxidase used is not particularly limited, and is, for example, 1 U or more, and preferably 7 U or more with respect to 1 g of the plant protein contained in the texturized plant protein ingredient. The amount of the glucose oxidase used with respect to 1 g of the plant protein contained in the texturized plant protein ingredient is preferably 15 U or more, more preferably 20 U or more, still more preferably 25 U or more, and still even more preferably 32 U or more from the viewpoint of further enhancing the effect of improving the binding property. The upper limit of the range of the amount of the glucose oxidase used with respect to 1 g of the plant protein is not particularly limited, and is, for example, 100 U or less, preferably 60 U or less, more preferably 50 U or less, and still more preferably 40 U or less, 30 U or less, or 20 U or less.

The amount of the glucose oxidase used with respect to 1 g of the texturized plant protein ingredient is, for example, 0.5 U or more, and preferably 3 U or more. The amount of the glucose oxidase used with respect to 1 g of the texturized plant protein ingredient is preferably 4 U or more, more preferably 6 U or more, still more preferably 10 U or more, and still even more preferably 14 U or more from the viewpoint of further enhancing the effect of improving the binding property. The upper limit of the range of the amount of the glucose oxidase used with respect to 1 g of the texturized plant protein ingredient is not particularly limited, and is, for example, 50 U or less, preferably 27 U or less, more preferably 23 U or less, and still more preferably 19 U or less, 15 U or less, or 13 U or less.

The ratio between the amounts of the protease and the glucose oxidase used is determined by the above-described amounts of the protease and the glucose oxidase used, and from the viewpoint of further enhancing the effect of improving the binding property, the amount of the glucose oxidase used with respect to 1 U of the protease is, for example, 0.001 U or more, preferably 0.01 U or more, more preferably 0.03 U or more, still more preferably 0.04 U or more, and still even more preferably 0.05 U or more. The upper limit of the range of the amount of the glucose oxidase used with respect to 1 U of the protease is not particularly limited, and is, for example, 1 U or less, preferably 0.12 U or less, more preferably 0.08 U or less, and still more preferably 0.06 U or less, 0.04 U or less, or 0.03 U or less.

Note that the activity of glucose oxidase is defined so that the amount of an enzyme required to oxidize 1 $\mu$mol of glucose per minute under the above-described conditions is 1 unit (1 U).

The maltotriosyl transferase used in the present invention is an enzyme that acts on polysaccharides and oligosaccharides having an $\alpha$-1,4 glucosidic linkage as a linkage form, and has an activity of transferring a maltotriose unit to a saccharide. Specific examples of the maltotriosyl transferase include maltotriosyl transferases derived from microorganisms and the like, and more specifically, maltotriosyl transferases derived from microorganisms belonging to the genera Aeribacillus, Geobacillus, and the like.

These maltotriosyl transferases may be used singly or in combination of two or more thereof. Among the above-described maltotriosyl transferases, maltotriosyl transferases derived from microorganisms belonging to the genus Aeribacillus are preferable from the viewpoint of further enhancing the effect of improving the binding property.

The amount of the maltotriosyl transferase used is not particularly limited, and is, for example, 1 U or more, and preferably 14 U or more with respect to 1 g of the plant protein contained in the texturized plant protein ingredient. The amount of the maltotriosyl transferase used with respect to 1 g of the plant protein contained in the texturized plant protein ingredient is preferably 20 U or more, more preferably 30 U or more, still more preferably 50 U or more, even more preferably 65 U or more, and still even more preferably 70 U or more from the viewpoint of further enhancing the effect of improving the binding property. The upper limit of the range of the amount of the maltotriosyl transferase used with respect to 1 g of the plant protein is not particularly limited, and is, for example, 500 U or less, preferably 120 U or less, more preferably 100 U or less, and still more preferably 80 U or less, 60 U or less, 40 U or less, or 30 U or less.

The amount of the maltotriosyl transferase used with respect to 1 g of the texturized plant protein ingredient is, for example, 6 U or more. The amount of the maltotriosyl transferase used with respect to 1 g of the texturized plant protein ingredient is preferably 1 U or more, more preferably 8 U or more, still more preferably 12 U or more, even more preferably 20 U or more, still even more preferably 28 U or more, and particularly preferably 30 U or more from the viewpoint of further enhancing the effect of improving the binding property. The upper limit of the range of the amount of the maltotriosyl transferase used with respect to 1 g of the texturized plant protein ingredient is not particularly limited, and is, for example, 300 U or less, preferably 55 U or less, more preferably 45 U or less, still more preferably 40 U or less, and still even more preferably 35 U or less, 30 U or less, 25 U or less, 20 U or less, or 15 U or less.

The ratio between the amounts of the protease and the maltotriosyl transferase used is determined by the above-described amounts of the protease and the maltotriosyl transferase used, and from the viewpoint of further enhancing the effect of improving the binding property, the amount of the maltotriosyl transferase used with respect to 1 U of the protease is, for example, 0.001 U or more, preferably 0.01 U or more, more preferably 0.03 U or more, still more preferably 0.06 U or more, even more preferably 0.08 U or more, and still even more preferably 0.095 U or more. The upper limit of the range of the amount of the maltotriosyl transferase used with respect to 1 U of the protease is not particularly limited, and is, for example, 1 U or less, preferably 0.24 U or less, more preferably 0.16 U or less, and still more preferably 0.12 U or less, 0.1 U or less, 0.06 U or less, or 0.04 U or less.

Note that the activity of a maltotriosyl transferase is determined so that when the maltotriosyl transferase is reacted with maltotetraose as a substrate at 40°C, the amount of the enzyme that generates 1 $\mu$mol of glucose per minute is 1 unit (1 U).

The polyphenol oxidase used in the present invention is an enzyme having a polyphenol oxidase activity. Specific examples of the polyphenol oxidase include laccases derived from microorganisms such as fungi and bacteria, and more specifically, polyphenol oxidases derived from microorganisms belonging to the genera Aspergillus, Neurospora, Podospora, Botrytis, Collybia, Fomes, Lentinus, Pleurotus, Pycnoporus, Pyricularia, Trametes, Rhizoctonia, Rigidoporus, Coprinus, Psatyrella, Myceliophtera, Schtalidium, Polyporus, Phlebia, Coriolus, and the like.

These polyphenol oxidases may be used singly or in combination of two or more thereof. Among the polyphenol oxidases, polyphenol oxidases derived from microorganisms are preferable, polyphenol oxidases derived from microorganisms belonging to the genus Trametes are more preferable, and laccases derived from microorganisms belonging to the genus Trametes are particularly preferable, from the viewpoint of further enhancing the effect of improving the binding property.

The amount of the polyphenol oxidase used is not particularly limited, and is, for example, 100 POU or more, and preferably 500 POU or more with respect to 1 g of the plant protein contained in the texturized plant protein ingredient. The amount of the polyphenol oxidase used with respect to 1 g of the plant protein contained in the texturized plant protein ingredient is preferably 1000 POU or more, more preferably 1500 POU or more, and still more preferably 2000 POU or more from the viewpoint of further enhancing the effect of improving the binding property. The upper limit of the range of the amount of the polyphenol oxidase used with respect to 1 g of the plant protein is not particularly limited, and is, for example, 10000 POU or less, preferably 5000 POU or less, more preferably 4000 POU or less, and still more preferably 3000 POU or less.

The amount of the polyphenol oxidase used with respect to 1 g of the texturized plant protein ingredient is, for example, 50 POU or more, and preferably 230 POU or more. The amount of the polyphenol oxidase used with respect to 1 g of the texturized plant protein ingredient is preferably 450 POU or more, more preferably 680 POU or more, and still more preferably 900 POU or more from the viewpoint of further enhancing the effect of improving the binding property. The upper limit of the range of the amount of the polyphenol oxidase used with respect to 1 g of the texturized plant protein ingredient is not particularly limited, and is, for example, 5000 POU or less, preferably 2200 POU or less, more preferably 1800 POU or less, and still more preferably 1300 POU or less.

The ratio between the amounts of the protease and the polyphenol oxidase used is determined by the above-described amounts of the protease and the polyphenol oxidase used, and from the viewpoint of further enhancing the effect of improving the binding property, the amount of the polyphenol oxidase used with respect to 1 U of the protease is, for example, 0.1 POU or more, preferably 1 POU or more, more preferably 2 POU or more, still more preferably 2.5 POU or more, and still even more preferably 3 POU or more. The upper limit of the range of the amount of the polyphenol oxidase used with respect to 1 U of the protease is not particularly limited, and is, for example, 100 POU or less, preferably 10 POU or less, more preferably 6 POU or less, and still more preferably 4 POU or less.

Note that the activity of a polyphenol oxidase is determined so that when the polyphenol oxidase is reacted with phenol as a substrate at 30°C, the amount of the enzyme that increases the absorbance by 0.1 per minute is 1 unit (1 POU).

The combined enzyme used in the step B is exemplified by a transglutaminase, a maltotriosyl transferase, and a polyphenol oxidase from the viewpoint of further enhancing the effect of improving the binding property.

In addition, from the viewpoint of tightening a texturized plant protein raw ingredient itself in a meat-like processed food product and further improving the meat-like feeling, a transglutaminase and a glucose oxidase are preferable among the combined enzymes to be used in the step B. From the viewpoint of improving the water holding property in a meat-like processed food product, a maltotriosyl transferase is preferable among the enzymes to be used in the step B. From the viewpoint of enhancing the chewy texture of a meat-like processed food product, a polyphenol oxidase is preferable among the enzymes to be used in the step B.

The processing conditions in the step B are not particularly limited, and can be set in consideration of the optimum conditions for the combined enzyme to be used. For example, the temperature is 3 to 70°C, and preferably 5 to 50°C.

The processing time in the step B is not particularly limited, and depends on, for example, the scale of the texturized plant protein ingredient. The processing time is, for example, 5 minutes or more, 10 minutes or more, 30 minutes or more, 1 hour or more, or 1.5 hours or more. The upper limit of the processing time range is not particularly limited, and is, for example, 48 hours or less, 24 hours or less, 12 hours or less, or 6 hours or less. Among these processing times, a range including a shorter processing time can be selected, for example, in the case of processing at 20 to 50°C, and a range including a longer processing time can be selected, for example, in the case of processing at a low temperature of 5 to 15°C.

The order of the step A and the step B in the method for producing of the present invention is not limited, and the steps may be performed simultaneously or sequentially. From the viewpoint of further enhancing the binding property, the step B is preferably performed after the step A.

After completion of the step A and the step B that is performed as necessary, the processed product is mixed and molded into a shape suitable for a desired form of the intended meat-like processed food product, and heat-cooked to obtain a meat-like processed food product.

The heat cooking method can be appropriately determined by those skilled in the art according to the kind of the meat-like processed food product. Specific examples of the heat cooking method include boiling, baking (roasting, toasting, baking, grilling, broiling), steaming, and grilling. These heat cooking methods may be used singly or in combination of two or more kinds thereof.

The specific form of the meat-like processed food product obtained by the method for producing of the present invention can conform to a meat processed food product cooked by molding and heating meat dough in which a minced meat is used. Specific examples of the meat processed food product include hamburg steaks, meat balls, patties, meat loaves, and minced meat cutlets.

2. Binding Property Improver for Texturized Vegetable Protein Ingredient

As described above, a protease can improve the binding property of a texturized plant protein ingredient. Therefore, the present invention also provides a binding property improver, for a texturized plant protein ingredient, including a protease.

Improving the binding property of a texturized plant protein ingredient means increasing the stickiness (sticking property) of the surface of the texturized plant protein ingredient. By improving the binding property of a texturized plant protein ingredient, the forming property of the meat-like processed food product before heating can be improved. Furthermore, in a preferred embodiment of the present invention, the meat-like processed food product after heating also can be prevented from losing its shape.

In the binding property improver for a texturized plant protein ingredient, the kind and the amount of the component used and the like are as shown in the above-described item "1. Method for Producing Meat-Like Processed Food Product".

EXAMPLES

Hereinafter, the present invention will be specifically described with reference to Examples, but the present invention is not to be construed as being limited to the following Examples.

[Ingredient and Enzyme Used]

(1) Texturized Plant Protein Ingredient

[Table 1]

| Abbreviation | Kind | Protein content | Manufacturer Trade name | Shape |
|---|---|---|---|---|
| Soy meat 1 | Granular soybean protein | 45.7 wt% | Nippon Garlic Corporation | Block |
| Soy meat 2 | Granular soybean protein | 61 wt% | Asahisyokuhin Corp. "Mameyano Oniku" | Block |
| Soy meat 3 | Granular soybean protein | 50 wt% | Marukome co., ltd. "Daizuno Oniku" | Mince |
| Pea meat 1 | Granular pea protein | 74 wt% | AJIGEN Co., Ltd. Yasaiga Marude Oniku" | Block |
| Soy meat 4 | Granular soybean protein | 50 wt% | Anthony's [Anthony's Textured Vegetable Protein ] | Flake |

(2) Used Enzyme

(2-1) Protease

[Table 2]

| Abbreviation | Manufacturer | Derivation, note |
|---|---|---|
| PR-MSD | Amano Enzyme Inc. | Protease derived from Aspergillus oryzae |
| PR-ASD | Amano Enzyme Inc. | Protease derived from Aspergillus oryzae |
| PR-AX | Amano Enzyme Inc. | Protease derived from Aspergillus oryzae |
| PR-UFSD | Amano Enzyme Inc. | Protease derived from Aspergillus oryzae |
| PRP3SD | Amano Enzyme Inc. | Protease derived from Aspergillus melleus |

(continued)

| Abbreviation | Manufacturer | Derivation, note |
|---|---|---|
| TH-PC10F | Amano Enzyme Inc. | Protease derived from Geobacillus stearothermophilus |
| PR-S | Amano Enzyme Inc. | Protease derived from Bacillus stearothermophilus |
| PRSD-NY10 | Amano Enzyme Inc. | Protease derived from Bacillus amyloliquefaciens |
| PRSD-AY10 | Amano Enzyme Inc. | Protease derived from Bacillus licheniformis |
| BRF-800D | Amano Enzyme Inc. | Cysteine protease derived from pineapple, bromelain |
| PC-W40 | Amano Enzyme Inc. | Proteases derived from papaya, papain |

(2-2) Combined enzyme

[Table 3]

| Abbreviation | Manufacturer | Derivation | Note |
|---|---|---|---|
| TG | - | Streptomyces mobaraensis | Transglutaminase |
| HD 1.5 | Amano Enzyme Inc. | Aspergillus niger | Glucose oxidase |
| GLT | Amano Enzyme Inc. | Genus Aeribacillus | Maltotriosyl transferase |
| LC-Y120 | Amano Enzyme Inc. | Genus Trametes | Polyphenol oxidase |
| KSSD-8 | Amano Enzyme Inc. | Bacillus amyloliquefaciens | $\alpha$-Amylase |
| GLYH-2 | Amano Enzyme Inc. | Penicillium multicolor | $\beta$-Glucosidase |
| GAF-6D | Amano Enzyme Inc. | Genus Rhizopus | Glucoamylase |
| BAF | Amano Enzyme Inc. | Bacillus flexus | $\beta$-Amylase |
| CA-3 | Amano Enzyme Inc. | Genus Aspergillus | Cellulase |
| PN-G | Amano Enzyme Inc. | Genus Aspergillus | Pectinase |
| LAY-30SD | Amano Enzyme Inc. | Genus Candida | Lipase |
| RP-1G | Amano Enzyme Inc. | Penicillium citrinum | Nuclease |
| DN-50000G | Amano Enzyme Inc. | Genus Aspergillus | Deaminase |

(2-3) Other Enzymes

[Table 4]

| Abbreviation | Manufacturer | Derivation | Note |
|---|---|---|---|
| LAY-30SD | Amano Enzyme Inc. | Genus Candida | Lipase |
| LGA-250G | Amano Enzyme Inc. | Penicillium camembertii | Lipase |

(3) Method of Measuring Enzyme Activity Value

(3-1) Method of Measuring Protease Activity Value

After 5 mL of a 0.6% (v/w) casein solution (0.05 mol/L sodium hydrogen phosphate, pH 8.0, in the case of measuring a protease other than PR-MSD) or a 0.6% (v/w) casein solution (0.7% (v/w) lactic acid, pH 3.0, in the case of measuring PR-MSD) was accurately weighed and heated at 37°C for 10 minutes, 1 mL of a sample solution containing a protease was accurately added, and the mixture was immediately shaken. This liquid was allowed to stand at 37°C accurately for 10 minutes, then 5 mL of a 0.44 mol/L trichloroacetic acid reagent was accurately added, and the mixture was shaken, allowed to stand at 37°C for 30 minutes again, and filtered. The first filtrate (3 mL) was removed, and the next filtrate (2 mL) was accurately weighed, 5 mL of a 0.55 mol/L sodium carbonate reagent and 1 mL of a diluted folin reagent (1 → 3) were each accurately added, and the mixture was well shaken and allowed to stand at 37°C for 30 minutes. This liquid (enzyme reaction liquid) was measured using water as a control to determine the absorbance AT at a wavelength of 660 nm.

Separately, the absorbance AB was measured for a liquid (blank) that was obtained by an operation similar to that for the above-described enzyme reaction liquid except that 1 mL of the sample solution containing a protease was accurately weighed, 5 mL of a 0.44 mol/L trichloroacetic acid reagent was accurately added, the mixture was shaken, then 5 mL of the sample solution was accurately added, and the mixture was immediately shaken and allowed to stand at 37°C for 30 minutes.

The amount of the enzyme that increased a folin reagent-coloring substance in an amount equivalent to 1 μg of tyrosine per minute was defined as 1 unit (1 U).

A 1 mg/mL tyrosine standard stock solution (0.2 mol/L hydrochloric acid) was weighed in amounts of 1 mL, 2 mL, 3 mL, and 4 mL accurately, and to each weighed out solutions, a 0.2 mol/L hydrochloric acid reagent was added so that the resulting liquid had an amount of 100 mL accurately. Each liquid was accurately weighed in an amount of 2 mL, 5 mL of a 0.55 mol/L sodium carbonate reagent and 1 mL of a diluted folin reagent (1 → 3) were each accurately added, and the mixture was immediately shaken and allowed to stand at 37°C for 30 minutes. These liquids were each measured using, as a control, a liquid obtained by weighing 2 mL of a 0.2 mol/L hydrochloric acid reagent accurately and performing an operation similar to that described above to determine the absorbances A1, A2, A3, and A4 at a wavelength of 660 nm. A calibration curve was prepared by plotting the absorbances A1, A2, A3, and A4 on the vertical axis and plotting the amount of tyrosine (μg) in 2 mL of each liquid on the horizontal axis, and thus the amount of tyrosine (μg) with respect to the absorbance difference 1 was determined.

[Math. 1]

$$\text{Protease activity value (U/g, U/mL)} = (AT - AB) \times F \times 11/2 \times 1/10 \times 1/M$$

AT: Absorbance of enzyme reaction liquid
AB: Absorbance of blank
F: Amount (μg) of tyrosine when absorbance difference is 1, determined from tyrosine calibration curve
11/2: Conversion factor to total liquid amount after stop of reaction
1/10: Conversion factor to value per minute of reaction time
M: Amount (g or mL) of protease in 1 mL of sample solution containing protease

(3-2) Method of Measuring Transglutaminase Activity Value

The enzyme activity of a transglutaminase was measured with the method described below using benzyloxycarbonyl-L-glutaminylglycine and hydroxylamine as substrates and using the following substrate solution and color development solution.

(Substrate Solution)

In distilled water, 2.42 g of 2-amino-2-hydroxymethyl-1.3-propanediol, 0.70 g of hydroxyammonium hydrochloride, 0.31 g of reduced glutathione, and 1.01 g of Z-Gln-Gly (benzyloxycarbonyl-L-glutaminylglycine) were dissolved so that the total amount was 100 mL (pH 6.0) to prepare a substrate solution.

(Color Development Solution)

A color development solution was prepared by mixing 30 mL of a 3 M hydrochloric acid solution, 30 mL of a 12 wt% trichloroacetic acid solution, and 30 mL of a 5 wt% iron (III) chloride solution.

(Measurement Method)

The enzyme was diluted with 200 mM Tris-HCl (pH 6.0) to an appropriate concentration to prepare a sample solution. To 10 μL of the sample solution, 100 μL of the substrate solution was added and mixed with the sample solution, and then the mixture was reacted at 37°C for 10 minutes. After 100 $\mu$L of the color development solution was added to stop the reaction and form an Fe complex, the absorbance at 525 nm was measured. As a control, the absorbance was measured for a mixture reacted in the same manner using the same solution previously heat-inactivated, and the absorbance difference from the non-inactivated sample solution was determined. Separately, a calibration curve was prepared using L-glutamic acid-$\gamma$-monohydroxamate instead of the sample solution, and the amount of hydroxamic acid generated was determined from the absorbance difference. The enzyme activity to generate 1 $\mu$mol of hydroxamic acid per minute was defined as 1 unit (1 U).

(3-3) Method of Measuring Glucose Oxidase Activity Value

An appropriate amount of the enzyme was weighed, a cooled potassium phosphate-sodium hydroxide buffer solution (0.1 mol/L) having a pH of 7.0 was added to dissolve or uniformly disperse the enzyme so that the resulting liquid had an amount of 50 ml, and thus a sample liquid was prepared. D(+)-glucose (2.50 g) was weighed, and water was added to dissolve the glucose so that the resulting solution had an amount of 25 mL to prepare a substrate solution. Into a quartz cell, 0.5 mL of the substrate solution, 2 mL of a potassium phosphate-sodium hydroxide buffer solution (0.1 mol/L, pH 7.0, phenol-containing), 0.5 mL of a peroxidase reagent (25 units/mL), and 0.1 mL of a 4-aminoantipyrine solution (1 → 250) were put and heated at 37°C for 10 minutes. To this solution, 0.1 mL of the sample liquid was added and well mixed with the solution, and the mixture was heated at 37°C to obtain a test liquid. Separately, an operation similar to that in preparation of the test liquid was performed using a potassium phosphate-sodium hydroxide buffer solution (0.1 mol/L) having a pH of 7.0 or water instead of the sample liquid to prepare a comparative liquid. The test liquid and the comparative liquid were measured to determine the absorbances 2 minutes and 5 minutes after the addition of the sample liquid at a wavelength of 500 nm. The amount of the oxidized glucose was quantified from the molar absorbance coefficient of the generated quinonimine dye. The amount of the enzyme required to oxidize 1 $\mu$mol of glucose per minute was defined as 1 unit.

(3-4) Method of Measuring Maltotriosyl Transferase Activity Value

To 2 mL of a 10 mmol/L MES buffer solution (pH 6.5) containing 1% maltotetraose (manufactured by Hayashibara Biochemical Laboratories, Inc.), 0.5 mL of the enzyme solution was added, and the mixture was allowed to stand at 40°C for 60 minutes. After the standing, the mixture was heated in a boiling water bath for 5 minutes, and then cooled in flowing water. The generated glucose was quantified with Glucose CII-test WAKO (manufactured by Wako Pure Chemical Industries, Ltd.). The amount of the enzyme that generates 1 $\mu$mol of glucose per minute under this condition was defined as 1 unit (1 U).

(3-5) Method of Measuring Polyphenol Oxidase Activity Value

Into a glass cell, 1 mL of a phenol reagent (0.25 mol/L) was put, 1 mL of a 4-aminoantipyrine reagent (0.009 mol/L) and 0.5 mL of a polyphenol oxidase activity test buffer solution were added and mixed, the mixture was heated at 30°C for 10 minutes, and then 0.5 mL of the sample liquid previously heated to 30°C was added and mixed. The absorbance at a wavelength of 505 nm was measured 10 seconds and 40 seconds after the addition of the sample liquid, and the absorbance change at a wavelength of 505 nm during 30 seconds was determined. When the absorbance increased by 0.1 per minute, the amount of the enzyme contained in 1 mL of the reaction liquid was defined as 1 unit (1 POU).

[Test Example 1]

To 25 ml of water, 5 g of a soybean meat 1 was added, 50 mg of one of the enzymes shown in Table 5 was further added and mixed, and the mixture was allowed to stand at 50°C for 1 hour and then allowed to stand at 70°C for 1 hour. Thereafter, the surface of the soybean meat 1 was touched with a finger, and thus presence or absence of a sticking property (stickiness) was examined to evaluate whether an effect of improving the binding property was obtained. Table 5 shows the results.

[Table 5]

| | Enzyme | | Amount of used enzyme/ 1 g of dry soybean meat | Amount of used enzyme/ 1 g of soybean protein | Sticking property (stickiness) |
|---|---|---|---|---|---|
| Comparative Example 1 | Absent | | Absent | Absent | Absent |
| Example 1 | PR-MSD | Protease | 440 U | 960 U | Present |
| Example 2 | PRP3SD | Protease | 3600 U | 7900 U | Present |
| Example 3 | PR-AX | Protease | 2600 U | 5700 U | Present |
| Example 4 | TH-PC10F | Protease | 1100 U | 2400 U | Present |
| Example 5 | PRSD-NY10 | Protease | 860 U | 1900 U | Present |
| Comparative Example 3 | LAY-30SD | Lipase | (10 mg) | - | Absent |
| Comparative Example 4 | LGA-250G | Lipase | (10 mg) | - | Absent |

As shown in Table 5, no effect of improving the binding property of the soybean meat 1 was obtained with a lipase, but when a protease was used, an effect of improving the binding property of the soybean meat 1 was obtained.

[Test Example 2]

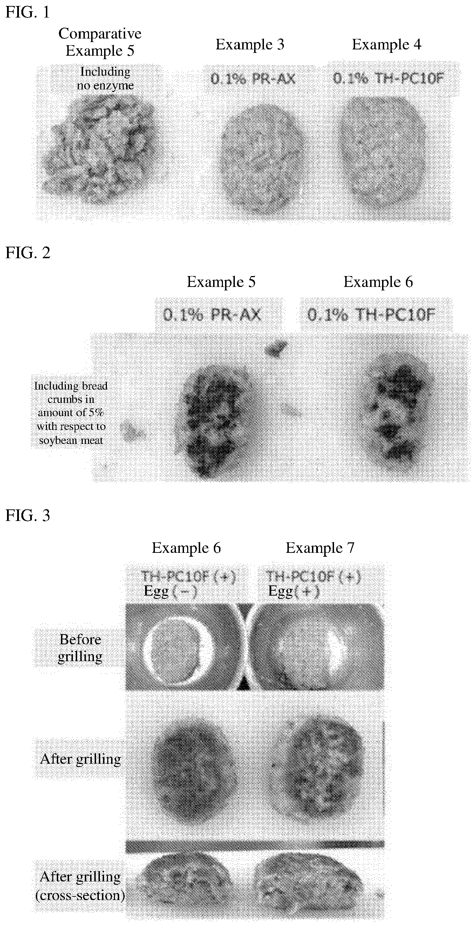

The soybean meat 1 was immersed in hot water and thus reconstituted to be expanded to about 3 times. One of the enzymes shown in Table 6 was added in the indicated amount, and the mixture was allowed to stand at 65°C for 1 hour and then kneaded by hand into a hamburg steak form. Fig. 1 shows the appearance of each soybean meat 1 formed.

[Table 6]

| Hamburg steak | | | | |
|---|---|---|---|---|
| | Enzyme | | Amount of used enzyme/1 g of dry soybean meat | Amount of used enzyme/1 g of soybean protein |
| Comparative Example 5 | Absent | | Absent | Absent |
| Example 3 | PR-AX | Protease | 750 U | 1600 U |
| Example 4 | TH-PC10F | Protease | 330 U | 700 U |

As shown in Fig. 1, the binding property was improved by the protease processing, and as a result, the forming property was remarkably improved. It was recognized that the effect of improving the forming property was higher in Example 4 than in other examples.

[Test Example 3]

A hamburg steak was formed and fried in the same manner as in Test Example 2 except that bread crumbs were used as a binder in an amount of 5 wt% with respect to the reconstituted soybean meat 1. Fig. 2 shows the appearance of each hamburg steak obtained by grilling.

[Table 7]

| Hamburg steak (using bread crumbs) | | | | |
|---|---|---|---|---|
| | Enzyme | | Amount of used enzyme/1 g of dry soybean meat | Amount of used enzyme/1 g of soybean protein |
| Example 5 | PR-AX | Protease | 750 U | 1600 U |
| Example 6 | TH-PC10F | Protease | 330 U | 700 U |

As shown in Fig. 2, no loss of shape was observed even after grilling. Furthermore, an egg was added as a binder in an amount of 17 wt%, and a hamburg steak was obtained in the same manner as described above (Example 7). Fig. 3 shows the appearance of each soybean meat 1 formed and the appearance and the cross-section of each hamburg steak obtained by grilling in Examples 6 and 7. As shown in Fig. 3, using an egg as a binder further improved the effect of suppressing loss of shape after grilling.

[Test Example 4]

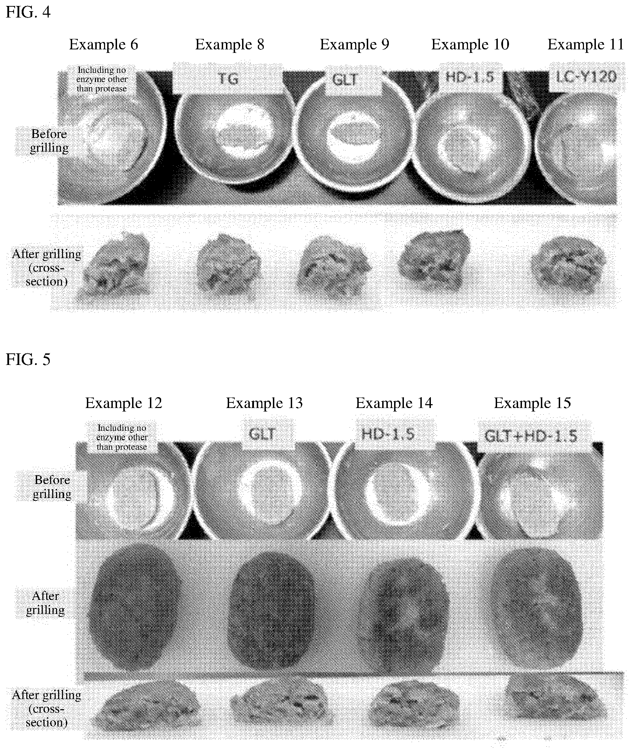

The soybean meat 1 was immersed in hot water and thus reconstituted to be expanded to about 3 times. One of the proteases shown in Table 8 was added in the indicated amount, the mixture was allowed to stand at 65°C for 1 hour, and then an enzyme other than the protease shown in Table 8 was further added in the indicated amount, and the mixture was kneaded by hand into a hamburg steak form. The formed soybean meat 1 was allowed to stand at a low temperature for 2 hours, and then fried. Fig. 4 shows the appearance of each soybean meat 1 formed and the cross-section of each hamburg steak obtained by grilling.

[Table 8]

| Hamburg steak | | | | |
|---|---|---|---|---|
| | Enzyme | | Amount of used enzyme/1 g of dry soybean meat | Amount of used enzyme/1 g of soybean protein |
| Example 6 | TH-PC10F | Protease | 330 U | 700 U |
| Example 8 | TH-PC10F | Protease | 330 U | 700 U |
| | TG | Transglutaminase | 11 U | 24 U |
| Example 9 | TH-PC10F | Protease | 330 U | 700 U |
| | GLT | Maltotriosyl transferase | 33 U | 72 U |
| Example 10 | TH-PC10F | Protease | 330 U | 700 U |
| | HD 1.5 | Glucose oxidase | 17 U | 37 U |
| Example 11 | TH-PC10F | Protease | 330 U | 700 U |
| | LC-Y120 | Polyphenol oxidase | 1200 POU | 2600 POU |

As shown in Fig. 4, in the hamburg steaks in Example 8 to Example 11, no binder was used, but no loss of shape was observed even after grilling, as in Example 6 in which a binder was used. Furthermore, the grains of the soybean protein were tightened and the meat-like feeling of the hamburg steak was further improved in Example 8 in which a transglutaminase was used in combination and Example 10 in which a glucose oxidase was used in combination, among Example 9 to Example 11. Furthermore, the water holding property of the hamburg steak was improved in Example 9 in which a maltotriosyl transferase was used in combination. In addition, the chewy texture of the hamburg steak was enhanced in Example 11 in which a polyphenol oxidase was used in combination.

[Test Example 5]

A hamburg steak was fried in the same manner as in Test Example 4 except that starch was used in an amount of 5 wt% with respect to the reconstituted soybean meat 1 and one of the enzymes shown in Table 9 was used in the indicated amount. Fig. 5 shows the appearance of each soybean meat 1 formed and the appearance and the cross-section of each hamburg steak obtained by grilling.

[Table 9]

| Hamburg steak (using starch) | | | | |
|---|---|---|---|---|
| | Enzyme | | Amount of used enzyme/1 g of dry soybean meat | Amount of used enzyme/1 g of soybean protein |
| Example 12 | TH-PC10F | Protease | 330 U | 700 U |
| Example 13 | TH-PC10F | Protease | 330 U | 700 U |
| | GLT | Maltotriosyl transferase | 10 U | 22 U |
| Example 14 | TH-PC10F | Protease | 330 U | 700 U |
| | HD 1.5 | Glucose oxidase | 5U | 11U |
| Example 15 | TH-PC10F | Protease | 330 U | 700 U |
| | GLT | Maltotriosyl transferase | 10 U | 22 U |
| | HD 1.5 | Glucose oxidase | 5U | 11U |

As shown in Fig. 5, the forming property and the effect of preventing loss of shape after grilling were further improved in Examples 13 to 15 in which a combined enzyme was used, among Examples 12 to 15. Furthermore, it was recognized that the effect was high in Example 13 and Example 15 in which a maltotriosyl transferase was used as a combined enzyme, and the effect was higher in Example 13 in which no glucose oxidase was used as a combined enzyme, among Examples 13 to 15.

[Test Example 6]

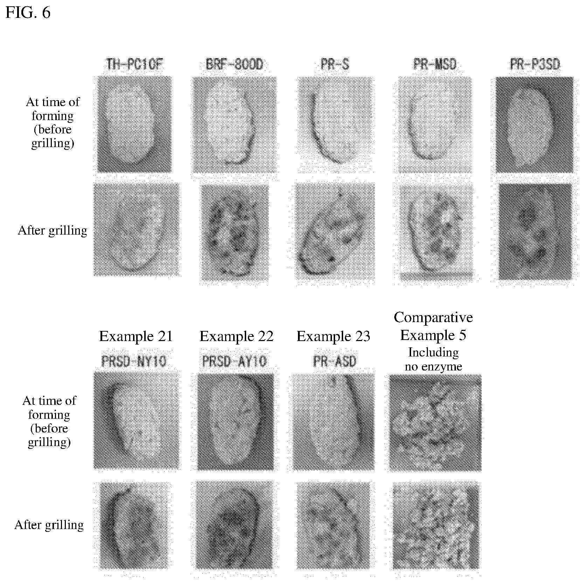

To 180 g of the soybean meat 1, 1000 ml of water was added and boiled for 10 minutes, and then the water was removed to obtain a reconstituted soybean meat 1. To 30 g of the reconstituted soybean meat 1, 100 ml of water and one of the enzymes shown in Table 10 (in an amount of 0.3 parts by weight with respect to 100 parts by weight of the reconstituted soybean meat 1) were added, the mixture was processed at 50°C for 1 hour, and then the water was removed. The obtained enzyme-processed soybean meat 1 was kneaded by hand, 2 g of a powdered pea protein was then added and further mixed, and the mixture was formed into a hamburg steak shape and then fried. Fig. 6 shows the appearance of each soybean meat 1 formed and the appearance of each hamburg steak obtained by grilling.

[Table 10]

| | Enzyme | |
|---|---|---|
| Example 16 | TH-PC10F | Protease |
| Example 17 | BRF-800D | Protease |
| Example 18 | PR-S | Protease |
| Example 19 | PR-MSD | Protease |
| Example 20 | PR-P3SD | Protease |
| Example 21 | PRSD-NY10 | Protease |
| Example 22 | PRSD-AY10 | Protease |
| Example 23 | PR-ASD | Protease |

(continued)

|  | Enzyme |
|---|---|
| Comparative Example 5 | None |

As shown in Fig. 6, in all of Examples 16 to 23, the binding property of the soybean meat 1 was remarkably improved as compared with Comparative Example 5, and an excellent forming property and an excellent effect of preventing loss of shape after grilling were recognized.

[Test Example 7]

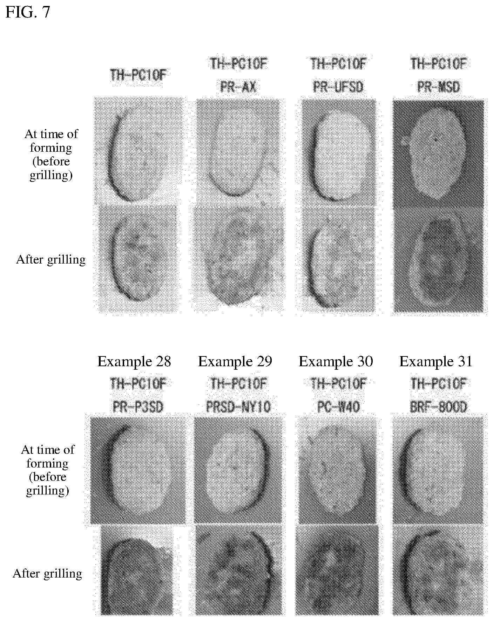

A hamburg steak was fried in the same manner as in Test Example 6 except that the enzyme added to the reconstituted soybean meat 1 was changed to one of the enzymes or the combinations of enzymes shown in Table 11, and that the amount of the enzyme added was changed to 0.15 parts by weight per enzyme with respect to 100 parts by weight of the reconstituted soybean meat 1. Fig. 7 shows the appearance of each soybean meat 1 formed and the appearance of each hamburg steak obtained by grilling.

[Table 11]

|  | Enzyme | |
|---|---|---|
| Example 24 | TH-PC10F | Protease |
| Example 25 | TH-PC10F | Protease |
|  | PR-AX | Protease |
| Example 26 | TH-PC10F | Protease |
|  | PR-UFSD | Protease |
| Example 27 | TH-PC10F | Protease |
|  | PR-MSD | Protease |
| Example 28 | TH-PC10F | Protease |
|  | PR-P3SD | Protease |
| Example 29 | TH-PC10F | Protease |
|  | PRSD-NY10 | Protease |
| Example 30 | TH-PC10F | Protease |
|  | PC-W40 | Protease |
| Example 31 | TH-PC10F | Protease |
|  | BRF-800D | Protease |

As shown in Fig. 7, in all of Examples 16 and 24 to 31, the binding property of the soybean meat 1 was remarkably improved as compared with Comparative Example 5, and an excellent forming property and an excellent effect of preventing loss of shape after grilling were recognized.

[Test Example 8]

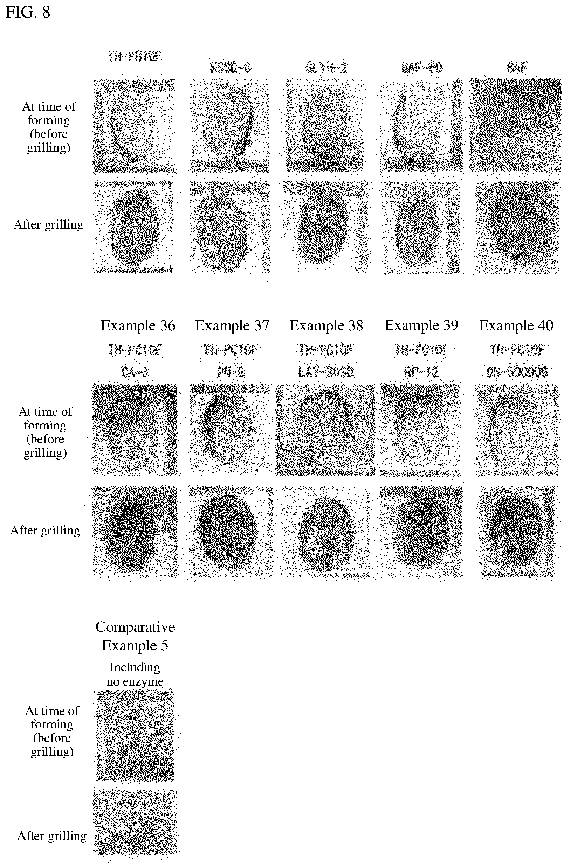

A hamburg steak was fried in the same manner as in Test Example 6 except that the enzyme added to the reconstituted soybean meat 1 was changed to one of the enzymes or the combinations of enzymes shown in Table 12, and that the amount of the enzyme added was changed to 0.3 parts by weight per enzyme with respect to 100 parts by weight of the reconstituted soybean meat 1. Fig. 8 shows the appearance of each soybean meat 1 formed and the appearance of each hamburg steak obtained by grilling.

[Table 12]

| | Enzyme | |
|---|---|---|
| Example 16 | TH-PC10F | Protease |
| Example 32 | TH-PC10F | Protease |
| | KSSD-8 | α-Amylase |
| Example 33 | TH-PC10F | Protease |
| | GLYH-2 | β-Glucosidase |
| Example 34 | TH-PC10F | Protease |
| | GAF-6D | Glucoamylase |
| Example 35 | TH-PC10F | Protease |
| | BAF | β-Amylase |
| Example 36 | TH-PC10F | Protease |
| | CA-3 | Cellulase |
| Example 37 | TH-PC10F | Protease |
| | PN-G | Pectinase |
| Example 38 | TH-PC10F | Protease |
| | LAY-30SD | Lipase |
| Example 39 | TH-PC10F | Protease |
| | RP-1G | Nuclease |
| Example 40 | TH-PC10F | Protease |
| | DN-50000G | Deaminase |
| Comparative Example 5 | None | |

As shown in Fig. 8, even when an enzyme other than a protease was used in combination, a remarkable effect of improving the binding property was obtained, and as a result, an excellent forming property and an excellent effect of preventing loss of shape after grilling were obtained. Therefore, it has been found that a functionality due to a combined enzyme can be imparted while an effect described above is effectively obtained by a protease.

[Test Example 9]

To 15 g (dry weight) of each of a soybean meat 2, a soybean meat 3, a pea meat 1, and a soybean meat 4, 4500 U of TH-PC 10F and 90 ml of water were added, each mixture was processed at 60°C for 1 hour, and then the water was removed. To the resulting enzyme-processed soybean meat 2 or 3 or enzyme-processed pea meat 1 or 2, 2 g of a powdered pea protein, 5 g of olive oil, and 0.45 g of common salt were added, and then the resulting mixture was kneaded by hand and formed and then fried to obtain a hamburg steak of the soybean meat 2 (Example 41), a hamburg steak of the soybean meat 3 (Example 42), a hamburg steak of the pea meat 1 (Example 43), and a hamburg steak of the soybean meat 4 (Example 44). The operation similar to that in each of Example 41 to Example 44 was performed except that TH-PC10F was not added (Comparative Examples 6 to 9).

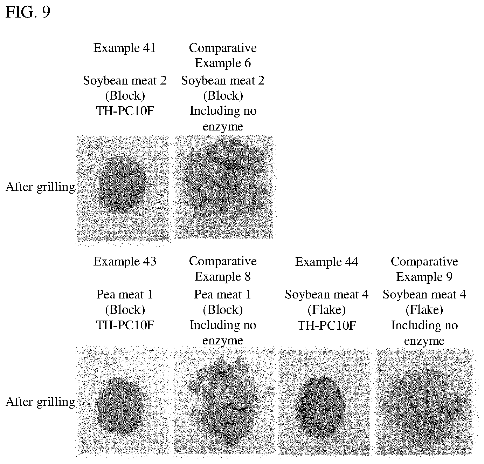

As a result, in all of Examples 41 to 44 that are to be compared with Comparative Examples 6 to 9 respectively, the binding property was remarkably improved, and an excellent forming property and an excellent effect of preventing loss of shape after grilling were recognized. That is, it was recognized that the remarkable effect of improving the binding property was exhibited regardless of the type of the plant protein and the shape of the texturized plant protein ingredient. Fig. 9 selects Examples 41, 43, and 44 and shows the appearances of the hamburg steaks (after grilling) together with the appearances of the hamburg steaks in Comparative Examples to be compared with these Examples.

**Claims**

1.  A method for producing a meat-like processed food product, the method comprising a step A of allowing a protease to act on a texturized plant protein ingredient.

2.  The method according to claim 1, wherein the protease is a protease derived from an Aspergillus microorganism, a protease derived from a Geobacillus microorganism, a protease derived from a Bacillus microorganism, and/or a protease derived from a plant.

3.  The method according to claim 1 or 2, wherein the protease is a protease derived from Aspergillus oryzae, a protease derived from Aspergillus melleus, a protease derived from Geobacillus stearothermophilus, a protease derived from Bacillus stearothermophilus, a protease derived from Bacillus amyloliquefaciens, a protease derived from Bacillus licheniformis, papain, and/or bromelain.

4.  The method according to any one of claims 1 to 3, further comprising a step B of allowing a transglutaminase, a glucose oxidase, a maltotriosyl transferase, a polyphenol oxidase, $\alpha$-amylase, $\beta$-amylase, $\beta$-glucosidase, glucoamylase, a cellulase, a pectinase, a lipase, a nuclease, and/or a deaminase to act.

5.  The method according to any one of claims 1 to 4, wherein the step B is performed after the step A.

6.  The method according to any one of claims 1 to 5, wherein the texturized plant protein ingredient contains a plant protein that is a soybean protein and/or a pea protein.

7.  The method according to any one of claims 1 to 6, wherein the protease is used in an amount of 100 U or more with respect to 1 g of the plant protein contained in the texturized plant protein ingredient.

8.  A binding property improver for a texturized plant protein ingredient, the binding property improver comprising a protease.

FIG. 1

| Comparative Example 5 | Example 3 | Example 4 |
|---|---|---|
| Including no enzyme | 0.1% PR-AX | 0.1% TH-PC10F |

FIG. 2

| | Example 5 | Example 6 |
|---|---|---|
| | 0.1% PR-AX | 0.1% TH-PC10F |
| Including bread crumbs in amount of 5% with respect to soybean meat | | |

FIG. 3

| | Example 6 | Example 7 |
|---|---|---|
| | TH-PC10F (+) Egg (−) | TH-PC10F (+) Egg (+) |
| Before grilling | | |
| After grilling | | |
| After grilling (cross-section) | | |

FIG. 4

FIG. 5

FIG. 6

|  | TH-PC10F | BRF-800D | PR-S | PR-MSD | PR-P3SD |

At time of forming (before grilling)

After grilling

|  | Example 21<br>PRSD-NY10 | Example 22<br>PRSD-AY10 | Example 23<br>PR-ASD | Comparative<br>Example 5<br>Including<br>no enzyme |

At time of forming (before grilling)

After grilling

FIG. 7

At time of
forming
(before
grilling)

After grilling

Example 28    Example 29    Example 30    Example 31

At time of
forming
(before
grilling)

After grilling

FIG. 8

FIG. 9

|                | Example 41 | Comparative Example 6 |
|----------------|------------|-----------------------|
|                | Soybean meat 2 (Block) TH-PC10F | Soybean meat 2 (Block) Including no enzyme |
| After grilling |            |                       |

|                | Example 43 | Comparative Example 8 | Example 44 | Comparative Example 9 |
|----------------|------------|-----------------------|------------|-----------------------|
|                | Pea meat 1 (Block) TH-PC10F | Pea meat 1 (Block) Including no enzyme | Soybean meat 4 (Flake) TH-PC10F | Soybean meat 4 (Flake) Including no enzyme |
| After grilling |            |                       |            |                       |

## INTERNATIONAL SEARCH REPORT

| International application No. |
|---|
| **PCT/JP2021/040966** |

### A. CLASSIFICATION OF SUBJECT MATTER

*A23J 3/00*(2006.01)i; *A23J 3/14*(2006.01)i; *A23J 3/16*(2006.01)i; *A23L 13/00*(2016.01)i; *A23L 35/00*(2016.01)i; *A23L 11/00*(2021.01)i
FI:  A23J3/00 502; A23L13/00 A; A23J3/16 501; A23J3/14; A23L11/00 Z; A23L11/00 F; A23L35/00

According to International Patent Classification (IPC) or to both national classification and IPC

### B. FIELDS SEARCHED

Minimum documentation searched (classification system followed by classification symbols)

A23J; A23L

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII); CAplus/FSTA (STN)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0012170 A (KOREA FOOD RESEARCH INSTITUTE) 05 February 2020 (2020-02-05) claims, paragraphs [0001]-[0013], [0019], example 1, comparative example 1, tables 3, 4 | 1-8 |
| Y | claims, paragraphs [0001]-[0013], [0019], example 1, comparative example 1, tables 3, 4 | 4-7 |
| A | JP 2010-47511 A (NIPPON SUISAN KAISHA LIMITED) 04 March 2010 (2010-03-04) table 1 | 7 |
| Y | WO 2017/154992 A1 (AJINOMOTO COMPANY INCORPORATED) 14 September 2017 (2017-09-14) claims, paragraph [0007] | 4-7 |
| Y | JP 54-122762 A (KANEGAFUCHI CHEMICAL INDUSTRY COMPANY LIMITED) 22 September 1979 (1979-09-22) claims, examples | 4-7 |
| X | JP 6-217702 A (SHOWA SANGYO COMPANY LIMITED) 09 August 1994 (1994-08-09) claims, paragraphs [0010], [0011], examples, tables 1-4 | 1-3, 6 |

☑ Further documents are listed in the continuation of Box C.   ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" | document member of the same patent family |
| "P" document published prior to the international filing date but later than the priority date claimed | | |

| Date of the actual completion of the international search | Date of mailing of the international search report |
|---|---|
| **15 December 2021** | **28 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2021/040966** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2006-141231 A (FUJI OIL COMPANY LIMITED) 08 June 2006 (2006-06-08) entire text | - |
| A | WO 2015/029555 A1 (FUJI OIL COMPANY LIMITED) 05 March 2015 (2015-03-05) entire text | - |

Form PCT/ISA/210 (second sheet) (January 2015)

INTERNATIONAL SEARCH REPORT
Information on patent family members

International application No.

**PCT/JP2021/040966**

| Patent document cited in search report | | | Publication date (day/month/year) | Patent family member(s) | | | Publication date (day/month/year) |
|---|---|---|---|---|---|---|---|
| KR | 10-2020-0012170 | A | 05 February 2020 | (Family: none) | | | |
| JP | 2010-47511 | A | 04 March 2010 | (Family: none) | | | |
| WO | 2017/154992 | A1 | 14 September 2017 | US | 2019/0037883 | A1 | |
| | | | | claims, paragraph [0017] | | | |
| | | | | EP | 3427595 | A1 | |
| JP | 54-122762 | A | 22 September 1979 | (Family: none) | | | |
| JP | 6-217702 | A | 09 August 1994 | KR | 10-1994-0018030 | A | |
| JP | 2006-141231 | A | 08 June 2006 | (Family: none) | | | |
| WO | 2015/029555 | A1 | 05 March 2015 | JP | 5673903 | B1 | |
| | | | | TW | 201507628 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010119985 A
- JP 2013009617 A
- JP 11178512 A
- JP 2006141231 A